Europäisches Patentamt

European Patent Office

Office européen des brevets

(11) Publication number: **0 312 741**
**A2**

# (12) EUROPEAN PATENT APPLICATION

(21) Application number: 88114006.5

(22) Date of filing: 27.08.88

(51) Int. Cl.⁴: **B29B 13/06 , F26B 3/347**

The title of the invention has been amended (Guidelines for Examination in the EPO, A-III, 7.3).

(30) Priority: 29.08.87 JP 217086/87
29.08.87 JP 217087/87
02.11.87 JP 277595/87
02.11.87 JP 277596/87

(43) Date of publication of application:
26.04.89 Bulletin 89/17

(84) Designated Contracting States:
AT BE CH DE ES FR GB GR IT LI LU NL SE

(71) Applicant: NISSUI KAKO CO., LTD.
1-11-4 Nishi-Kawaguchi
Kawaguchi-City Saitama 332(JP)

(72) Inventor: Nakagomi, Shoji c/o Nissui Kako
Co., Ltd.
4-11-4 Nishi-Kawaguchi
Kawaguchi-City Saitama 332(JP)

(74) Representative: Patentanwälte Kirschner &
Grosse
Forstenrieder Allee 59
D-8000 München 71(DE)

(54) Method and apparatus for the microwave drying of plastic material.

(57) A method of and apparatus for microwave drying of wet pelletized or powdered plastic materials. The wet material is introduced into a drying drum which is connected to a source of microwave radiation. The drying drum is also provided with means for continuously agitating the wet material, and means for purging the drum with drying gas and for exhausting moisture laden gas therefrom. After drying, the dried material is conveyed out of the drum for further processing. A plurality of such drying drums may be provided which may be connected in series or parallel fashion to auxiliary hoppers, using suction valves to control the conveyance of material between the various components of the system in timed sequence to provide a continuous supply of dried material.

FIG. 1

# APPARATUS FOR A METHOD OF MICROWAVE DRYING OF PLASTIC MATERIAL

## Background of the Invention

### Field of the Invention

The herein disclosed invention relates to the removal of undesirable moisture from pelletized or powdered plastic material for subsequent molding, and, more particularly, to a method of an apparatus for microwave drying of such material.

### Description of the Relevant Prior Art

In recent years, the molding of various plastic items from pelletized or powdered plastic materials has come to be one of the world's leading industrial processes. However, in order to produce a quality molded plastic item, it is important that the moisture or water content of the powdered or pelletized material be made as low as possible. If the water content of the unmolded material is too high, the plastic may become hydrolyzed, causing degradation of the molded plastic part. The resultant part will suffer deterioration of its strength and durability, its surface finish may be impaired, its transparency may become obstructed, and the accuracy of the part may be compromised.

Conventionally, hopper dryers are used for drying plastic materials. Hopper dryers circulate hot, dry air through the powdered or pelletized plastic material. Electric heat exchangers are used to exchange heat with air and contact the plastic material, driving off moisture which is recovered with a desiccating material. This heating process requires a long period of time before the plastic dries sufficiently to be usable in the molding process. For example, PET (polyethylenetepthylate) requires 6 to 8 hours of drying prior to molding.

For most plastic material which is to be molded, the less moisture content, the better the quality of the molded product. This is particularly true of engineering plastics such as nylon, polycarbonate, ABS and PET, which are greatly adversely affected by moisture present during the molding process. For example, water content should be below 50 parts per million for PET bottles and 100 parts per million for polycarbonate compact discs.

Due to the low efficiencies achieved by conventional methods, alternative processes have been proposed. For example, U.S. Patent No. 4,546,226 discloses the use of radio frequency energy to dry particulate dielectric material as it passes through a screw conveyer. A means is provided for regulating the on-time of the RF generator to keep the temperature of the particulate material within a preset range. However, it has been found that radio frequency in the disclosed range of 50 to 100 megahertz will penetrate the plastic material only 5 to 10 millimeters after passing through the screw conveyer. Uneven heating and drying have been observed using this process.

U.S. Patent Nos. 4,055,001; 3,977,089; and 3,771,234 disclose a microwave drying process for synthetic polymers. The wet polymer is conveyed through a pneumatic conveyer having a resonating cavity operating at a frequency of 915 megahertz for a time sufficient to reduce the volatile content to about 5 weight percent. It is subsequently conveyed through a second pneumatic conveyer with a resonating cavity operating at a microwave frequency of 2,450 megahertz for a time sufficient to reduce the volatile content to below .05 weight percent.

## Summary of the Invention

Disclosed and claimed herein is a method and apparatus for microwave drying of pelletized or powdered plastic materials preparatory to the molding process. The method combines exposing the wet pellets of plastic material to microwave radiation, while at the same time keeping the pellets agitated with agitating blades. A drying gas such as air or an inert gas is used to provide a moisture-free atmosphere for the drying process. It has been found that utilizing microwaves to dry the material at the same it is being continuously agitated and exposed to the drying gas results in extremely efficient drying of the material, both with regard to the duration of the drying process and the reduction in moisture content achieved.

A drying drum is provided which has an inlet for the pelletized plastic material. A microwave radiation source is provided for generating microwaves at a frequency in a range of between 2000 and 3000 megahertz and preferably at a frequency of 2450 megahertz. A duct is provided for conveying the microwaves from the generator (typically, a magnetron) to the interior of the drum. Agitating blades are disposed inside the drum and connected to a drive motor disposed outside of the drum. Means are provided for introducing a drying gas into the drum and removing moisture laden air and gas therefrom. A system may be provided for circulating the drying gas while the plastic material is being agitated and exposed to the microwaves. The circulating means may take several different configurations. For example, in one embodiment, a vacuum source is connected to the drying drum. Relatively dry ambient air enters the drum as the moister air in contact with the drying plastic is sucked from the drum by the vacuum motor.

It has been found that satisfactory drying results may be obtained by providing a separate source of a drying gas such as dry air or an inert gas. This drying gas may be blown into the chamber by means of a blower. Drying gas outlet means are then provided for exhaustion of the now moisturized drying gas. Such a source of drying gas may be provided by a conventional air dryer connected in tandem with a blower motor to provide dried, ambient air to serve as the drying gas. Alternatively, the blower and air dryer may be in fluid communication with the drying gas outlet to provide a closed loop system for continuous recirculation of drying gas.

In an alternative embodiment, a blower used to cool the microwave generator or magnetron may be used to blow air heated thereby directly into the drying drum. Since almost 40 percent of the electricity used by the magnetron to generate microwaves is lost to heat which is conventionally exhausted to the atmosphere, the efficiency of the system may be greatly increased by this arrangement. The heated air may be blown into the drying drum through the microwave duct or a separate conduit may be provided. ·

Preferably, a dryer temperature sensor is provided inside the drying drum to monitor the temperature of the plastic material being dried. A temperature controller is operatively connected to the temperature sensor and to the microwave generator to control the temperature of the plastic material to within a certain preset parameter. Any kind of conventional sensor can be used for this purpose, such as a thermocouple or thermistor. Preferably, the temperature sensor comprises a cromelalumel thermocouple.

The drying apparatus of the instant invention may comprise either a single drying drum and associated source of microwave radiation, drying gas source and agitator, or a plurality of such drums may be provided which may be interconnected in either series or parallel fashion, depending on the capabilities required by the particular situation. By combining a plurality of relatively small drying drums hooked in tandem to one large hopper, a large batch of dried plastic material may be provided without the necessity of using a large drying drum which would require supplying a large amount of microwave energy. The smaller drums may utilize as sources of microwave radiation magnetrons typically used with household appliances, which magnetrons are inexpensive and readily available in contrast to the large magnetron which would be required by using one large drying drum.

An additional advantage is obtained in using a plurality of small volume drying chambers since small batches of dried material are continuously transferred to one large hopper. If only one large volume drying drum is used, a large amount of wet material is transferred into the hopper at one time, resulting in uneven drying since the last portion of the large volume of material contacts drying gas in the upper part of the drum which has more vapor content than the gas encountered in the lower portion of the drum by the first part of the material fed into the hopper. As a result, the plastic material as measured vertically has a greater vapor content at the top than at the bottom.

In another embodiment, the plurality of drying drums may be arranged in series fashion. A volume of wet plastic material is introduced into the first drying drum, but left partially undried. The partially dried material is then fed into the second of the drying drums for more complete drying. The advantage of this arrangement is that the size of the drying drums may be halved, thus allowing the use of correspondingly smaller magnetrons. In the first of the smaller drums, the temperature of the plastic material is brought to a preset level, and requires a relatively larger microwave generator source. However, the temperature of the plastic material in the second drum has only to be maintained and a relatively small magnetron is required. By splitting the two functions of elevating and maintaining temperature, electrical energy is conserved.

In those embodiments which provide multiple drying drums, it is contemplated that means will be provided for controlling the intake and discharge of the pelletized plastic material into and out from each drum in a particular timed sequence to provide a continuously operating batch process. To that end, a vacuum motor is connected via first fluid conduit means to the plastic inlet means of the plurality of smaller dryers which are hooked in tandem, or to the first of the smaller dryer in the case of the dryers hooked in parallel fashion. The vacuum motor is connected via second fluid conduit means to either the hopper to which the tandem-connected smaller dryers are connected or to the second of the smaller of the dryers connected in parallel fashion. Selectively switchable suction valves are associated with each of the first and second fluid conduit means. By use of these valves, wet plastic material may be drawn into the drying drums and dried plastic material out of the hopper or out of the second parallel drying drum at preset, cyclic intervals.

Brief Description of the Drawings

The following detailed description may best be understood by reference to the following drawings in which:

FIGURE 1 shows a plastic drying apparatus of the instant invention depicted schematically;

FIGURE 2 illustrates the drying apparatus of Figure 1 showing an alternative system for circulating drying gas;

FIGURE 3 depicts schematically the use of plural drying drums discharging into a single hopper and associated feeder;

FIGURE 4a depicts a multiple batch version of the drying apparatus of the instant invention and a control system therefore, and FIGURE 4b is a graph illustrating the cyclic operation thereof;

FIGURE 5a depicts multiple drying drums connected in parallel to a single feeding hopper and control system therefore, and FIGURE 5b graphically illustrates the cyclic operation thereof;

FIGURE 6a schematically depicts multiple drying drums connected in series fashion and a control system therefore, and FIGURE 6b graphically illustrates the cyclic operation thereof; and

FIGURE 7 is a plot of time versus water content for the drying apparatus of the present invention illustrating improved drying results over both prior art systems and systems combining only some of the elements of the present apparatus.

Detailed Description of the Preferred Embodiment

Throughout the following detailed description, like reference numerals are used to refer to the same element of the present invention shown in multiple figures thereof.

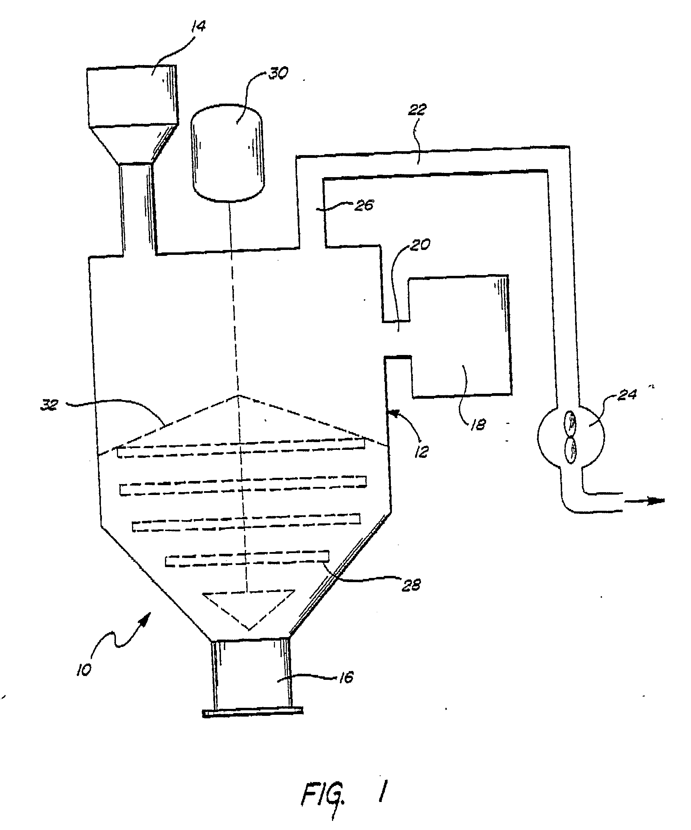

Referring now to the drawing and in particular to Figure 1, there is depicted an apparatus 10 suitable for drying pelletized or powdered plastic material for use in subsequent molding operations. The apparatus 10 comprises a drying drum 12 having a plastic material inlet 14 and a plastic material outlet 16. A source 18 of microwave radiation is provided and is operatively connected to the inside of drying drum 12 by microwave radiation conduit or waveguide 26. By means of conduit 26, microwave radiation in a range of approximately 2000 to 3000 megahertz, and preferably of 2,450 megahertz is directed into the inside of drum 12 for exposure of plastic material introduced through inlet 14 thereto. The typical desirable level of plastic material within drum 12 is depicted by reference numeral 32. Substantially the entire mass of plastic material is kept agitated by agitator blades 28 which are driven by drive motor 30. The agitator blades 28 may take any conventional form and are adapted to sweep substantially the entire volume of plastic material below level 32.

Means 22 for exhausting moisture-laden air from drum 12 is provided. In the embodiment depicted in Figure 1, means 22 takes the form of a vacuum motor 24 which is operatively connected to the interior of drum 12 via conduit 26. Vacuum pump 24 keeps the air pressure inside the drying drum lower than the atmospheric pressure of the ambient environment outside the drying drum 12. Hence, the plastic material inside drying drum 12 is constantly kept under a partial vacuum to enhance the drying process, and moisture-laden air is exhausted.

Wet plastic material is fed into drying drum 12 via inlet 14. Inside drum 12, the wet plastic material is exposed to the microwaves generated by microwave radiation source 18. According to well known principles, the microwave radiation causes the water molecules contained in the wet plastic material to vibrate. The water is heated by frictional energy created by the vibration, and the resultant heated water gradually moves from the inside of the mass of plastic material to the outside thereof, where it escapes as water vapor. The water vapor and air contained inside drying drum 12 are exhausted into the ambient atmosphere by means of conduit 26. After a sufficient period of time to accomplish the drying process, typically approximately one and one-half hours for PET plastic particles, the dried plastic material is allowed to leave from the drum 12 via plastic material outlet 16, at which point it is thence conveyed to a molding machine (not shown).

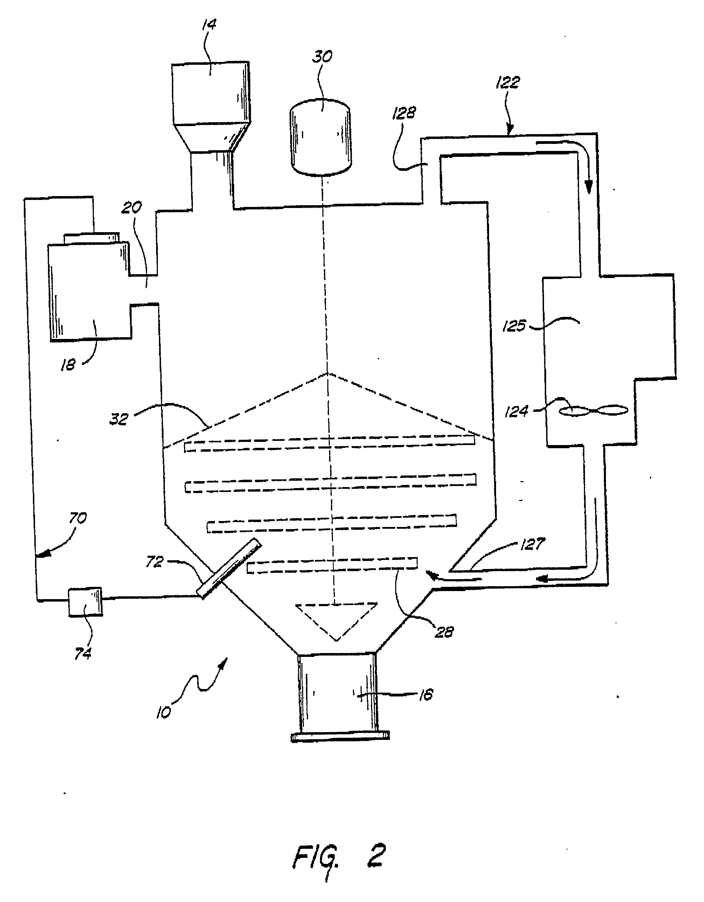

As shown in Figure 2, the apparatus 10 of the instant invention further comprises means 70 for regulating the temperature of the plastic material during the drying process. The temperature regulating means 70 comprises a temperature probe 72 which monitors the temperature of the drying plastic inside drum 12. Probe 72 is operatively connected to temperature controller 74, which is in turn operatively connected to microwave radiation source 18. Temperature controller 74, acting in response to temperature readings from temperature probe 72, acts to control the operation of microwave radiation source 18 to keep the temperature of the drying plastic within a preselected range. If the temperature exceeds the preselected range, generation of microwaves will be stopped. If the temperature falls below the preselected range, microwave radiation source 18 will be activated by temperature controller 74.

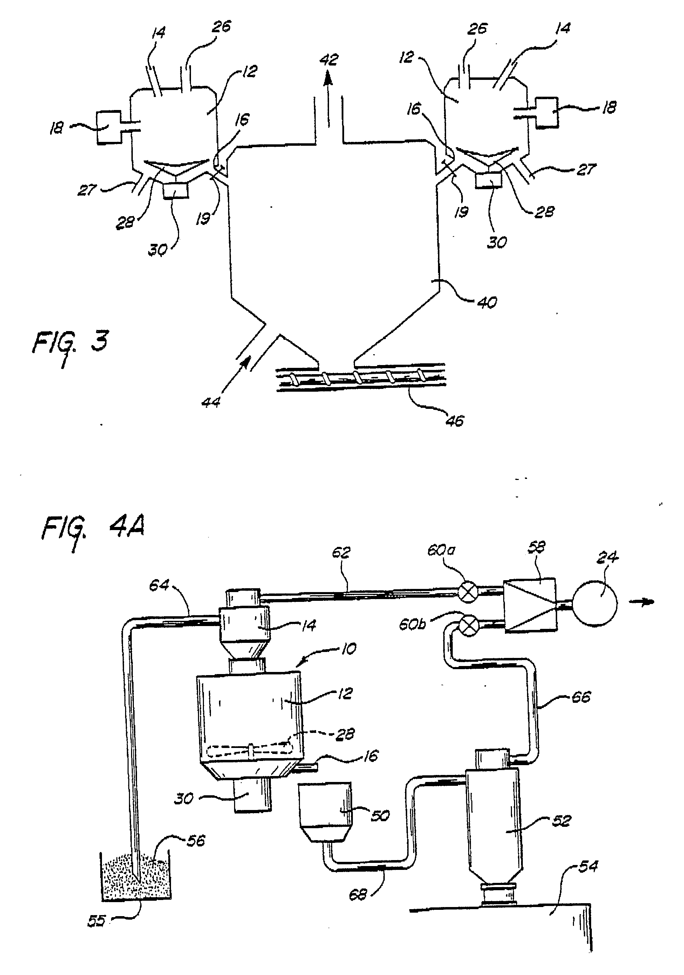

In the embodiment depicted in Figure 2, an alternate exhaust means 122 for exhausting moisture from drum 12 is depicted. This alternate system 122 comprises a blower fan 124 which blows air or another drying gas such as an inert gas into the interior of drum 12 via conduit 127. Conduit 126 is provided for exhaustion of moisture-laden drying gas from drum 12. As depicted in Figure 2, exhaust means 122 operates in a closed loop fashion to recirculate the drying gas through drum 12. In addition to blower 124, a conventional air dryer 125 is provided to remove moisture from the air exhausted from drum 12 via conduit 126. In this fashion, the same drying gas can be recirculated over and over. Alternatively, exhaust means 122 can be an open end system, as is depicted in Figure 3, for example.

For some applications, such as continuous molding operations, large volumes of plastic material are required. If a single, large volume hopper is used to accommodate this requirement, a correspondingly large microwave generator will be required. Unfortunately, the size of the hopper required and the cost of the large microwave source needed can reduce the advantage of using the microwave drying apparatus for drying plastic material. However, as can be seen in Figure 3, the above problem can be solved by using a number of small, mass produced microwave generators 18 to dry plastic material in small batches. A plurality of drying drums 12 are provided which feed intermittently into a molding machine hopper 40. With this embodiment, all of the system components are relatively small and inexpensive. Moreover, mass produced, air cooled microwave generators can be used as microwave radiation source 18. Such air-cooled microwave generators are of high quality, inexpensive and widely available compared to the large microwave generator needed to supply energy for a single drying drum, large scale system. By utilizing a plurality of smaller drums, a practical, efficient system for continuous drying of plastics material is created.

The hopper 40 depicted in Figure 3 may, for example, have a maximum capacity of 450 liters of plastic material. It is connected in parallel fashion to eight smaller drying drums 12 (two of which are visible in this figure) having capacities of only 28 liters each. Each small drying drum 12 has its own magnetron 18 with a 2.0 kilowatt input and 1.3 kilowatt output capacity respectively. Each of the small drying drums 12 has its associated agitator 28 and drive means 30, as well as inlets 26 for the introduction of a drying gas and outlets 27 for venting the drum as well as delivery conduits 16 communicating with the large hopper 40.

The large hopper 40 has its own circulation system for a drying gas. Hopper 40 is purged with a drying gas which is introduced through inlet 44, and moisture-laden air and gas is exhausted through outlet 42. Hence, dried plastic material which is introduced into hopper 40 through conduits 16 is maintained in its dried condition. Valves 19 control the introduction of dried plastic material into hopper 40. Preferably, hopper 40 is insulated to keep the dried plastic material at an elevated temperature. Feeder 46 sends the dried plastic material from hopper 40 to an extruder or molding machine (not shown). By sequencing the operation of the eight small drying drums 12 a continuous 160 kilograms per hour production of dried plastic material may be maintained. In contrast, if one large magnetron were used to produce a continuous rate of 160 kilograms per hour, the energy input to the magnetron would need to be 16 kilowatts to achieve an energy output of 8 kilowatts needed to dry this amount of material. Such a magnetron would be a very expensive, custom produced item.

Figure 4a shows a continuously operating batch molding system including a drying apparatus 10, generally similar to that of Figure 1 and having a drum 12, agitator 28, agitator motor 30, inlet 14 and discharge port 16. Although not visible in this view, the dryer 10 further includes a source of microwave energy as previously described. The system of Figure 4a further includes a plurality of material handling conduits 72,64,66,68 operatively connected to a vacuum motor 24, similar to that previously described, preferably via a filter 58.

Associated with the conduits are a pair of valves 60a,60b which may be either manually or electrically actuated valves. The apparatus of Figure 4a includes a supply hopper 55 having wet plastic material 56 retained therein and communicating with the dryer 10 via a supply conduit 64. The dryer 10 discharges dried plastic material into a temporary hopper 50, which conveys the dried material to the hopper 52 of a molding machine 54 through another conduit 68.

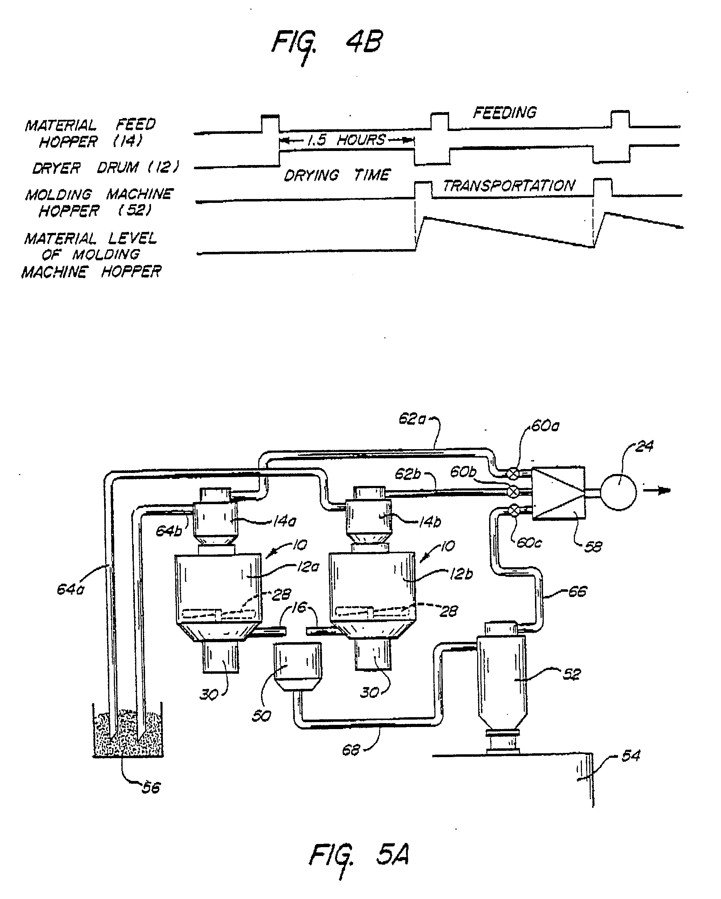

The cyclic operation of the continuous batch system shown in Figure 4a is schematically illustrated in Figure 4b. First, valve 60a is opened to feed wet plastic material to drying drum 12. After the requisite drying time, the dried material is fed to temporary hopper 50, whereupon suction valve 60b is opened and material vacuumed from temporary hopper 50 to the supply hopper 52, of the molding machine 54. As the time chart shows, valve 60a is opened to apply suction to conduits 62,64 so as to feed a suitable amount of wet material from the supply 55 to the inlet 14 and thence into dryer drum 12. Microwave energy is applied and the material is dried. The dried plastic accumulates in the temporary hopper 50, and approximately one and one-half hours later, valve 60b is opened to move the dried material from temporary hopper 50 to molding machine hopper 52. Alternatively, material could be fed directly from drying drum 12 to molding machine hopper 52, thus eliminating the necessity of temporary hopper 50.

Alternatively, as is depicted in Figure 5a, a number of smaller drying apparatus 10 can feed into a junction hopper 50 which is connected to the molding machine hopper 52 via conduit 68. Wet plastic material 56 is introduced into small drying drums 12a and 12b via conduits 64a and 64b respectively. Vacuum pump 24 and air filter 58 are connected in tandem and communicate with both small drying drums 12a and 12b via conduits 62a and 62b, as well as with molding machine hopper 52 via conduit 66, as in the previous example.

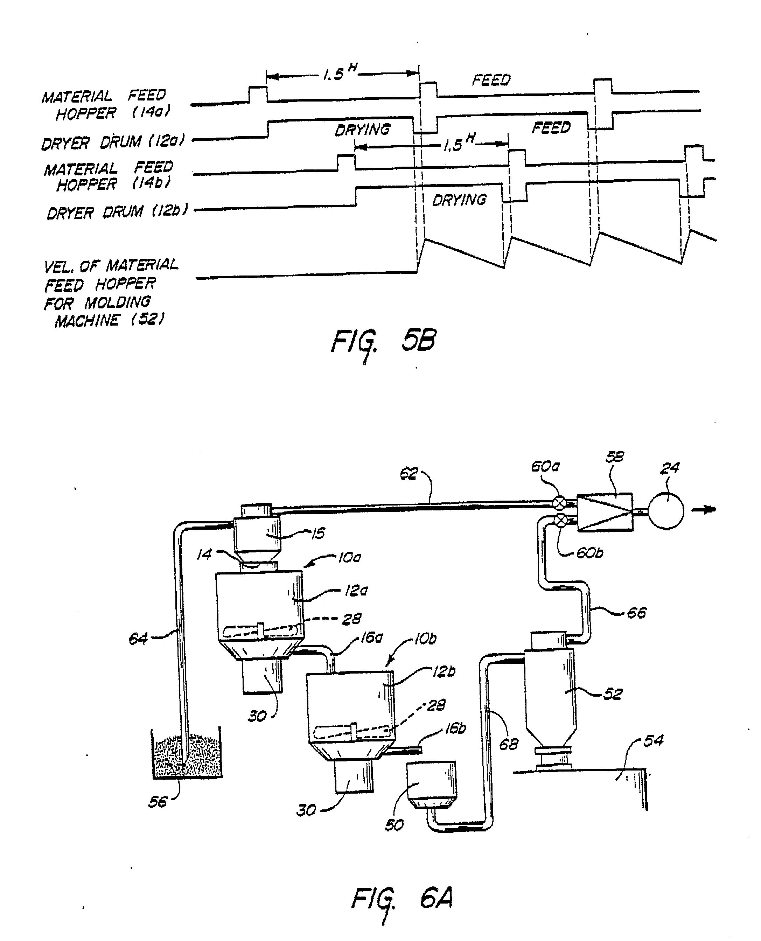

Referring now to Figure 5b, the cyclic operation of the plural feed system illustrated in Figure 5a is schematically depicted. By using suction valve 60a, 60b, 60c, predetermined amounts of wet plastic material are conveyed to dryer drums 12a and 12b and dried material conveyed to molding machine hopper 52. As illustrated in Figure 5b, opening suction valves 60a conveys material into dryer drum 12a for one and one-half hours of microwave drying. Similarly, opening suction valve 60b conveys material into drying drum 12b for one and one-half hours of microwave drying. Opening suction valve 60c conveys dried material from drying drums 12a and 12b through temporary hopper 50 and thence into molding machine hopper 52. The chart shows how material feed to the plurality of small drying drums may be controlled by staggering the opening of air suction control valves 60a and 60b. The two batch-type dryers 12a and 12b send dried plastic material to the molding machine alternately so the size of each batch-type dryer can be reduced by one-half compared to a conventional batch-type dryer. By staggering operation of the plurality of small drying drums, a continuous supply of dried material is made available to molding machine 54. Again, the size of the microwave generator required as well as the other components can be reduced in size. This not only reduces original procurement costs, but makes cleaning and maintenance easier. Again, the temporary junction hopper 50 can be eliminated by feeding material directly from the small drying drums into the molding machine hopper 54.

Figure 6a depicts a system having a number of small, batch-type drying apparatus 10a,10b arranged in series fashion. Suction valve 60a connects vacuum motor 24 and drying gas filter 58 to the inlet 14 of drying drum 12a. Optionally, a material feed hopper 15 may be provided for small drying drum 12a. Opening of suction valve 60a causes wet plastic material 56 to be conveyed into the inlet 14 (or the material supply hopper 15 when such is included) and thence into small drying drum 12a. After the material has been partially dried, it passes via conduit 16a into a second small drying drum 12b for further drying. After being completely dried, it is conveyed via conduit 16b into temporary hopper 50. Conduits 66 and 68 connect vacuum motor 24 and drying gas filter 58 with temporary hopper 50 and molding machine hopper 52, respectively, and operate to cause the vacuum motor 25 to convey material from temporary hopper 50 into molding machine hopper 52 for subsequent use by molding machine 54.

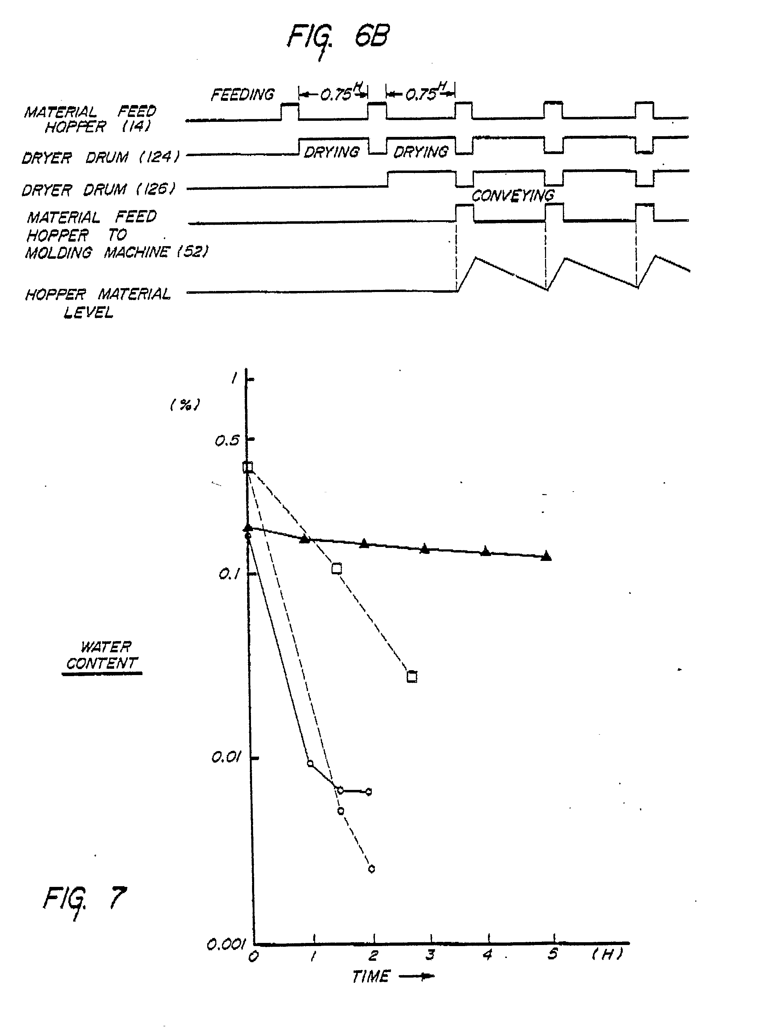

The cyclic operation of the series connected system of Figure 6a is schematically depicted in Figure 6b. As can be seen in Figure 6b, after wet plastic material is conveyed into small drying drum 12a by opening suction valve 60a, it is allowed to dry for only three-quarters of an hour. It then passes into small drying drum 12b for another 45 minutes of drying. In the meanwhile, more material has been introduced into small drying drum 12a. This system allows half batches of completely dried material to be fed at 45 minute intervals into temporary hopper 50 and molding machine hopper 52. Thus, two smaller drying drums 12a, 12b are used to supply the same amount of dried plastic material as would be supplied by a single drum of twice the capacity. As mentioned before, a much smaller magnetron may be used as the microwave radiation source to finish drying the half-dried, hot material received by drying drum 12b. Thus, a total savings of energy required for the system is realized.

The method for and apparatus of the instant invention preferably involves three separate components, namely, exposing the wet plastic material to microwave radiation, continuously agitating the material, and exposing the wet material to an atmosphere of drying gas. It has been experimentally found that all three components are found necessary to achieve optimum drying of the material both in terms of time required and minimizing final moisture content. If one of the three components is omitted, the optimum effects are not achieved.

Figure 7 illustrates the synergistic effect of combining the three components in the drying process. Figure 7, which plots time against final moisture content, shows the drying curves for PET material under four different conditions. Curve A illustrates the drying operation using all three components, namely, microwave energy, agitation, and drying gas. As can be seen, a final moisture content of below fifty parts per million was achieved after approximately one and one-half hours of drying operation. Curve B depicts the dryer of the instant invention used without a drying gas being introduced into the drum. As can be seen, the final moisture content of the dried material is unacceptably high, even after a drying period of approximately one and one-half hours, at which point the curve flattens out and no further reduction in moisture content is observed. Curve C depicts the dryer being used without the agitator. It is obvious that the results achieved are much worse and that the final moisture content is far too high for acceptable molding. For curve D, the dryer was used without the microwave generator. Almost no drying was observed.

When all three components are used as shown in curve A, drying speed is rapid and water content after two hours of drying is only 0.0026 weight percent. While curve B shows rapid drying speed, the water content remains at .0065 percent after two hours of drying. For curve C, even after three hours of drying the remaining water content is 0.026 percent. Similar values are observed through tests of several types of engineering plastics. In certain materials which do not require such low levels of remaining moisture content, the drying gas may be eliminated. However, it is critical that continuous agitation be supplied during the drying process.

While it was initially thought that agitation was not required, it has been experimentally shown that drying times are two to three times faster when agitation is provided. Moreover, it has been found that the microwaves penetrate almost 40 centimeters to the bottom of the drying drum. If agitation is not provided, local temperature rises are detected and uneven drying occurs. In order to achieve the very low moisture content required for quality molding of certain engineering plastics, even the microwave radiation and agitation are inadequate. Thus, the provision of a dry atmosphere in the drying drum by purging the drying drum with a drying gas or gasses and exhausting the evaporated moisture therefrom.

The present invention has been described with reference to certain embodiments and exemplifications thereof. It may be that other such embodiments and exemplifications would become obvious to one skilled in the art by using the teachings disclosed herein. Hence, the scope of the present invention is not limited to the exemplifications and embodiments described, but rather by the claims appended hereto.

## Claims

1. An apparatus for drying particulate plastic material for subsequent molding, the apparatus comprising:
a drying drum;
a plastic material inlet and a plastic material outlet disposed on the drying drum;
a source of microwave radiation;
a microwave radiation conduit connecting the source of microwave radiation to the interior of the drying drum;
an agitator disposed inside the drum for agitating the plastic material; and
a motor for driving the agitator.

2. The apparatus of claim 1 further comprising means for introducing a drying gas into the drum.

3. The apparatus of claim 2 further comprising means for exhausting moisture from the drum.

4. The apparatus of claim 3 wherein the means for exhausting moisture comprises a vacuum pump in fluid communication with the drum and operative to maintain the air pressure within the drum at a lower level than the air pressure of the ambient environment.

5. The apparatus of claim 3 wherein the means for exhausting moisture comprises a blower in fluid communication with the drum and a moisture outlet disposed in the drum.

6. The apparatus of claim 5 further comprising dryer means operatively associated with the blower.

7. The apparatus of claim 6 wherein the blower and associated dryer are in fluid communication with the moisture outlet means to form a closed loop drying gas circulating system.

8. The apparatus of claim 5 wherein the blower is also used to cool the microwave radiation source and inputs the drying gas into the drum through the microwave radiation conduit.

9. The apparatus of claim 5 wherein the blower is also used to cool the microwave radiation source and inputs the drying gas into the drying drum through a separate drying gas conduit.

10. The apparatus of claim 1 further comprising a temperature sensor operatively disposed to monitor the temperature of the drying plastic material within the drying drum.

11. The apparatus of claim 10 further comprising a temperature controller operatively connected to the temperature sensor and to the microwave radiation source to maintain the temperature of the plastic material below a preset value.

12. The apparatus of claim 1 further comprising:
a plurality of drums and associated sources of microwave radiation; and
a junction hopper having a plastic material outlet, said junction hopper being in communication with the plastic material outlet of each of the plurality of drying drums so that dried plastic material therefrom may enter the junction hopper for subsequent discharge therefrom through the plastic material outlet thereof.

13. The apparatus of claim 12 further comprising feeder means associated with the plastic material outlet of the junction hopper to convey the dried plastic material for subsequent molding.

14. The apparatus of claim 13 further comprising drying gas inlet and outlet means disposed on the junction hopper for purging the hopper with a drying gas.

15. The apparatus of claim 12 further comprising:

a blower;

a mold machine hopper;

first fluid conduit means connecting the blower with the plastic material inlets of each of the plurality of drying drums;

second fluid conduit means connecting the blower with the mold machine hopper and the mold machine hopper with the plastic material outlet of the junction hopper; and

at least one selectively switchable suction valve associated with each of the first and second fluid conduit means to selectively and cyclically draw wet plastic material into the plurality of drying drums and dried plastic material into the mold machine hopper at preset intervals.

16. The apparatus of claim 1 further comprising:

a second drying drum and associated microwave generating means, the plastic material inlet of which is in communication with the plastic material outlet of the first drying drum;

a suction motor;

a mold machine hopper communicating with the plastic material outlet of the second drying drum;

first fluid conduit means connecting the blower with the plastic material inlet of the first drying drum;

second fluid conduit means connecting the blower with the mold machine hopper; and

selectively switchable suction valves associated with each of the first fluid conduit means and the second fluid conduit means to selectively and cyclically draw wet plastic material into the first drying drum and partially dried plastic material into the second drying drum, and dried plastic material into the mold machine hopper at preset intervals.

17. A method of drying particulate plastic material comprising the steps of:

providing a drying drum having associated plastic material inlets and outlets;

introducing wet, particulate plastic material into the drying drum through the inlet;

exposing the plastic material within the drum to a source of microwave radiation;

agitating the plastic material while it is being irradiated; and

discharging the dried, plastic material through the outlet in the drum.

18. The method of claim 17 further comprising the step of purging the drying drum with a drying gas prior to the introduction of wet material thereinto.

19. The method of claim 17 wherein the microwaves have a frequency in a range of between 2000 and 3000 megahertz.

20. The method of claim 19 wherein the microwaves have a frequency of approximately 2450 megahertz.

21. The method of claim 17 wherein the dried, plastic material is discharged from the drum only after it has a moisture content of no greater than 50 parts per million.

22. The method of claim 17 wherein the microwaves penetrate the plastic material to a depth of approximately 40 centimeters.

FIG. 1

FIG. 2

EP 0 312 741 A2

FIG. 3

FIG. 4A

## FIG. 4B

MATERIAL FEED
HOPPER (14)

← 1.5 HOURS →

FEEDING

DRYER DRUM (12)

DRYING TIME

TRANSPORTATION

MOLDING MACHINE
HOPPER (52)

MATERIAL LEVEL
OF MOLDING
MACHINE HOPPER

## FIG. 5A

MATERIAL FEED HOPPER (14a)

DRYER DRUM (12a)

MATERIAL FEED HOPPER (14b)

DRYER DRUM (12b)

VEL. OF MATERIAL FEED HOPPER FOR MOLDING MACHINE (52)

FIG. 5B

FIG. 6A

## FIG. 6B

MATERIAL FEED HOPPER (14)

FEEDING |← 0.75ᴴ →|← 0.75ᴴ →|

DRYER DRUM (124)    DRYING   DRYING

DRYER DRUM (126)

MATERIAL FEED HOPPER TO MOLDING MACHINE (52)    CONVEYING

HOPPER MATERIAL LEVEL

## FIG. 7

WATER CONTENT

(%)

TIME →  (H)